# EUROPEAN PATENT SPECIFICATION

(11) **EP 3 171 671 B1**
(45) Date of publication and mention of the grant of the patent: **28.11.2018**
(21) Application number: 16206421.6
(22) Date of filing: 11.01.2012
(51) Int. Cl.: H05B 33/08

(54) **AC-DC DUAL-USE LED DRIVING CIRCUIT**
WECHSEL- UND GLEICHSTROMANTRIEBSSCHALTUNG FÜR LED MIT DUALER VERWENDUNG
CIRCUIT DE CONDUITE À DEL À DOUBLE USAGE AC-DC

(30) Priority: 08.06.2011 TW 100120049
(43) Date of publication of application: 24.05.2017
(62) Divisional of application: 12150734.7
(73) Proprietor: Macroblock, Inc., Hsinchu City (TW)
(72) Inventor: Li, Yan-Cun, Hsinchu City (TW); Liu, Hsing-Fu, Hsinchu City (TW); Chang, Jui-Chi, Hsinchu City (TW); Yeh, Po-Yao, Hsinchu City (TW)
(74) Representative: dompatent von Kreisler Selting Werner - Partnerschaft von Patent- und Rechtsanwälten mbB

(56) References cited:
- EP-A2- 2 228 787
- WO-A1-2008/132658
- US-A1- 2005 151 518
- US-A1- 2008 284 346
- US-A1- 2009 261 748
- US-A1- 2010 118 572
- US-B1- 7 671 575

## Description

### Technical Field

The disclosure relates to a Light Emitting Diode (LED) driving circuit, and more particularly to an Alternating-current-to-Direct-current (AC-to-DC) LED driving circuit.

### Background

Recently, with increasing awareness of environmental protection, how to save energy has become an important topic. With respect to devices for illumination, LEDs, compared with common light emitting sources, are advantageous in having long service life, low power consumption, and being not easily damaged, and thus they are developed vigorously and play a critical role in daily life.

A conventional LED driving circuit includes a transformer, a Pulse Width Modulation (PWM) Integrated Circuit (IC), a constant-current circuit, and a feedback circuit. The transformer includes a primary side and a secondary side, and the feedback circuit includes a sensing resistor and a photocoupler. The PWM IC is electrically coupled to the primary side of the transformer, and the constant-current circuit is electrically coupled to the secondary side of the transformer. By the current passing trough the sensing resistor and the photocoupler, the feedback circuit couples a feedback signal to the PWM IC. The photocoupler receives the optical signal of the secondary side to generate a feedback signal, and the PWM IC receives the feedback signal to adjust the duty ratio of the PWM signal, wherein the duty ratio means the sustaining time of the PWM signal during which the voltage of the PWM signal remains high level in a duty cycle.

Accordingly, the LED driving circuit requires the photocoupler to couple the feedback signal to the PWM IC, thereby adjusting the duty ratio of the PWM signal output from the PWM IC. Therefore, the conventional LED driving circuit must employ more elements, a larger accommodation space is needed, and the manufacturing cost is also increased.

In another example LED driving circuit, a feedback device such as the aforementioned photo-coupler may not be necessary so long as output parameters are controlled and their tolerance are accounted for, as disclosed in Schneiker et al. (US 2005/0151518). And in another implementation of the LED driving circuit illustrated in Mednik et al. (US 2010/0118572), a detection mechanism for the difference of the current in a controlled switch and the current conducted by the controlled switch is necessary, which may complicate the entire circuitry design and increase the manufacturing cost.

Also, US2008284346, to Lee Sang Yun et al, discloses a LED array driving apparatus for driving a light emitting array having a plurality of LEDs connected to one another, including: a DC-DC converting part; a current/voltage detecting part, a switching transistor of the DC-DC current converter and detecting a magnitude of a current flowing through the LED array and a constant current controlling part controlling an on/off duty of the switching transistor.

### SUMMARY

Accordingly, the disclosure is an AC-DC DUAL-USE LED driving circuit for solving the problems existing in the prior art.

In an embodiment, the AC-DC DUAL-USE LED driving circuit which is suitable for driving an LED comprises an input power circuit, a buck-boost converter and a PWM signal controller. The buck-boost converter comprises a switching transistor, a feedback resistor, a low pass filter and a free-wheeling diode. One end of the free-wheeling diode is connected to the low pass filter and the other end of the free-wheeling diode is connected to the LED. A floating ground terminal of the PWM signal controller is coupled to both the switching transistor and the low pass filter. Two ends of the feedback resistor are connected to the floating ground terminal and the low pass filter, respectively. The buck-boost converter is used for receiving a current signal from the input power circuit and outputting a driving signal. The AC-DC dual-use LED driving circuit is used to drive the LED by using the driving signal. The PWM signal controller is used to output a PWM signal according to a feedback signal passing through the low pass filter for sequentially turning on and turning off the switching transistor

The AC-DC dual-use LED driving circuit according to the disclosure is suitable for driving an LED. Through making the buck-boost converter and the PWM signal controller having a common ground, the AC-DC dual-use LED driving circuit can dynamically adjust the duty ratio of the PWM signal without connecting to an external photocoupler. When the input power circuit comprises an AC signal source, the power factor of the AC-DC dual-use LED driving circuit can be improved, wherein the power factor is a ratio of an effective power to an apparent power. When the input power circuit is a DC signal source, the current (the driving signal) for driving the LED is a constant, no matter whether the voltage of the DC signal source is higher or lower than that of an output terminal (the voltage of a second capacitor). No matter whether the input power circuit comprises the AC signal source or the DC signal source, the high frequency signals in the transformed signal I_{D} which passes through the free-wheeling diode is filtered out by the low pass filter. Then, the PWM signal controller receives the feedback signal and then outputs the corresponding PWM signal.

### BRIEF DESCRIPTION OF THE DRAWINGS

The disclosure will become more fully understood from the detailed description given herein below for illustration only, and thus are not limitative of the disclosure, and wherein:
FIG. 1 is a schematic circuit block diagram of an AC-DC dual-use LED driving circuit according to an embodiment of the disclosure;
FIG. 2 is a schematic structural view of a circuit according to Embodiment 1 of FIG. 1;
FIG. 3 is a schematic view of circuit architecture according to an embodiment of an error amplification terminal, a compensation terminal, a feedback terminal, and a control terminal as shown in FIG. 2;
FIG. 4A is a timing diagram of a signal waveform of an AC signal according to an embodiment of the circuit architecture as shown in FIG. 2;
FIG. 4B is a timing diagram of a signal waveform of a current signal according to an embodiment of the circuit architecture as shown in FIG. 2;
FIG. 4C is a timing diagram of a signal waveform of a first current according to an embodiment of the circuit architecture as shown in FIG. 2;
FIG. 4D is a timing diagram of a signal waveform of a PWM signal according to an embodiment of the circuit architecture as shown in FIG. 2;
FIG. 4E is a timing diagram of a signal waveform of a driving signal according to an embodiment of the circuit architecture as shown in FIG. 2;
FIG. 5 is a schematic structural view of a circuit according to Embodiment 2 of FIG. 1;
FIG. 6 is a schematic circuit block diagram of an AC-DC dual-use LED driving circuit according to an embodiment of the disclosure;
FIG. 7A is a timing diagram of a signal waveform of an current signal according to an embodiment of the circuit architecture as shown in FIG. 6;
FIG. 7B is a timing diagram of a signal waveform of a first current according to an embodiment of the circuit architecture as shown in FIG. 6;
FIG. 7C is a timing diagram of a signal waveform of a PWM signal according to an embodiment of the circuit architecture as shown in FIG. 6;
FIG. 7D is a timing diagram of a signal waveform of a driving signal according to an embodiment of the circuit architecture as shown in FIG. 6;
FIG. 7E is a timing diagram of a signal waveform of a transformed signal according to an embodiment of the circuit architecture as shown in FIG. 6; and
FIG. 7F is a timing diagram of a signal waveform of a feedback signal according to an embodiment of the circuit architecture as shown in FIG. 6.

### DETAILED DESCRIPTION

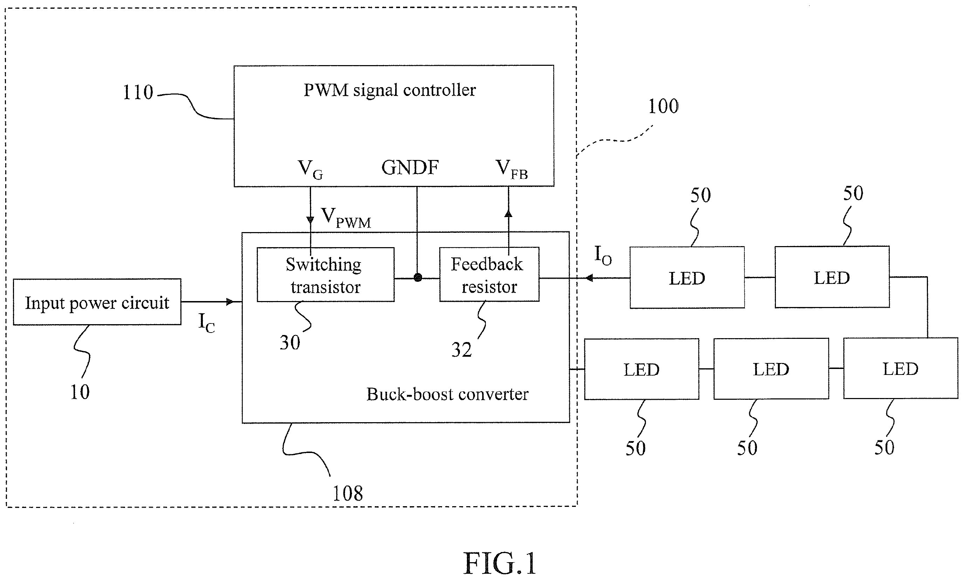

FIG. 1 is a schematic circuit block diagram of an AC-DC dual-use LED driving circuit according to an embodiment of the disclosure. The AC-DC dual-use LED driving circuit 100 is suitable for driving five LEDs 50. In this embodiment, the number of the LEDs 50 may be, but not limited to, five, and the LEDs 50 may be connected in series; however, this embodiment is not intended to limit the disclosure. That is to say, the number of the LEDs 50 may be ten. Besides, in some embodiments, the LEDs 50 may be connected in parallel, which can be adjusted according to various requirements.

The AC-DC dual-use LED driving circuit 100 comprises an input power circuit 10, a buck-boost converter 108, and a PWM signal controller 110. The buck-boost converter 108 comprises a switching transistor 30 and a feedback resistor 32. One end of the feedback resistor 32 is coupled to one of the five LEDs 50, and a floating ground terminal GNDF of the PWM signal controller 110 is coupled to the switching transistor 30 and the other end of the feedback resistor 32.

The input power circuit 10 is used to output a current signal I_{C}, and the buck-boost converter 108 receives the current signal I_{C} and outputs a driving signal I_{O}. The AC-DC dual-use LED driving circuit 100 drives the five LEDs 50 by the driving signal I_{O}. The PWM signal controller 110 outputs a PWM signal V_{PWM} according to the driving signal I_{O} for sequentially turning on and turning off the switching transistor 30. The PWM signal controller 110 may be, but not limited to, a control circuit in a voltage mode.

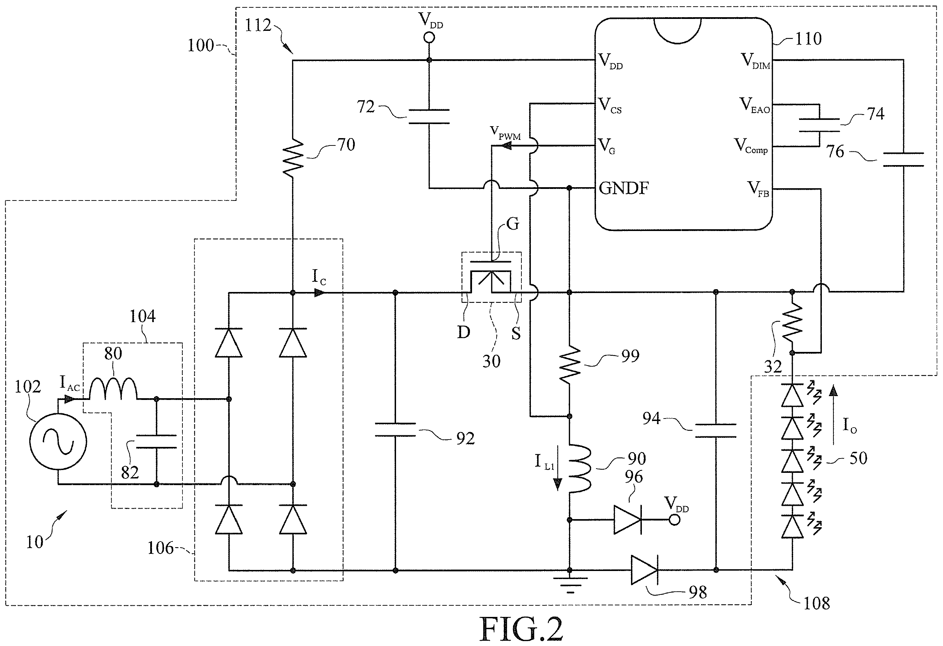

FIG. 2 is a schematic structural view of a circuit according to Embodiment 1 of FIG. 1. In this embodiment, the input power circuit 10 may comprise an AC signal source 102, a first filter 104, and a bridge rectifier 106. The first filter 104 may comprise a filter inductor 80 and a first filter capacitor 82. The filter inductor 80 may be connected to the AC signal source 102 in series, and connected to the AC signal source 102 in parallel. In this embodiment, the switching transistor 30 is an N-channel Metal-Oxide Semiconductor Field Effect Transistor (NMOSFET). However, this embodiment is not intended to limit this disclosure. In some embodiments, the switching transistor 30 may also be a Bipolar Junction Transistor (BJT) or a P-channel Metal-Oxide Semiconductor Field Effect Transistor (PMOSFET). The PWM signal controller 110 may comprise the floating ground terminal GNDF, a feedback terminal V_{FB}, and a control terminal V_{G}. One end of the feedback resistor 32 is coupled to the LED 50, and the floating ground terminal GNDF is coupled to the switching transistor 30 (that is, a source S of the NMOSFET) and the other end of the feedback resistor 32. The control terminal V_{G} is coupled to a gate G of the switching transistor 30, and a drain D of the switching transistor 30 is coupled to the bridge rectifier 106.

The AC signal source 102 outputs an AC signal I_{AC} to the first filter 104, and the first filter 104 filters out noises in the AC signal I_{AC}. The bridge rectifier 106 receives the AC signal I_{AC} passing through the first filter 104 and outputs the current signal I_{C}. The buck-boost converter 108 receives the current signal I_{C} and outputs the driving signal I_{O}, and the AC-DC dual-use LED driving circuit 100 drives the five LEDs 50 by the driving signal I_{O}. The PWM signal controller 110 outputs the PWM signal V_{PWM} according to the driving signal I_{O} for sequentially turning on and turning off the switching transistor 30 (that is, the NMOSFET). The detailed operation process of the AC-DC dual-use LED driving circuit 100 is described hereinafter.

In addition, in this and some embodiments, the AC-DC dual-use LED driving circuit 100 further comprises a power control unit 112, and the power control unit 112 is used to power the PWM signal controller 110. The power control unit 112 may comprise a starting resistor 70, a second filter capacitor 72, and a first diode 96. One end of the starting resistor 70 is coupled to the bridge rectifier 106, and the other end of the starting resistor 70 is coupled to a circuit voltage terminal V_{DD}. One end of the second filter capacitor 72 is coupled to the circuit voltage terminal V_{DD}, the other end of the second filter capacitor 72 is coupled to the floating ground terminal GNDF, and an output terminal of the first diode 96 is coupled to the circuit voltage terminal V_{DD}. The circuit voltage terminal V_{DD} is used for receiving the working voltage of the PWM signal controller 110.

When the voltage of the second filter capacitor 72 (that is, the voltage of the circuit voltage terminal V_{DD}) does not reaches the working voltage of the PWM signal controller 110 yet,, the current signal I_{C} output by the bridge rectifier 106 charges the second filter capacitor 72 through the starting resistor 70. When the voltage of the second filter capacitor 72 (that is, the voltage of the circuit voltage terminal V_{DD}) reaches the working voltage of the PWM signal controller 110, the PWM signal controller 110 may start to output the PWM signal V_{PWM} for sequentially turning on and turning off the switching transistor 30 (that is, the NMOSFET). After powered by the power control unit 112 through the starting resistor 70, the PWM signal controller 110 is then powered by the power control unit 112 through the first diode 96. The buck-boost converter 108 may further comprise a first inductor 90, a second capacitor 94, a second diode 98, and a sensing resistor 99. One end of the first inductor 90 is grounded, and coupled to an input terminal of the first diode 96 and an input terminal of the second diode 98, and the other end of the first inductor 90 is coupled to the sensing resistor 99. An output terminal of the second diode 98 is coupled to one end of the second capacitor 94, and the other end of the second capacitor 94 is coupled to the floating ground terminal GNDF. One end of the sensing resistor 99 is coupled to the floating ground terminal GNDF. The PWM signal controller 110 detects a first current I_{L1} passing through the first inductor 90, and limits the value of the first current I_{L1} via the sensing resistor 99 so as to protect the switching transistor 30 and the second diode 98.

In this embodiment, the buck-boost converter 108 may also comprise a first capacitor 92, one end of the first capacitor 92 is grounded, and the other end is coupled to the drain D of the switching transistor 30. The first capacitor 92 may be used to filter out the noises in the current signal I_{C}; however, this embodiment is not intended to limit the disclosure.

The PWM signal controller 110 may further comprise a compensator 74, a third filter capacitor 76, an error amplification terminal V_{EAO}, a compensation terminal V_{Comp}, a light adjusting terminal V_{DIM}, and a protection terminal V_{CS}. One end of the compensator 74 is coupled to the error amplification terminal V_{EAO}, and the other end of the compensator 74 is coupled to the compensation terminal V_{Comp}. One end of the third filter capacitor 76 is coupled to the light adjusting terminal V_{DIM}, and the other end of the third filter capacitor 76 is coupled to the floating ground terminal GNDF. The protection terminal V_{CS} is coupled to the first inductor 90 and the other end of the sensing resistor 99.

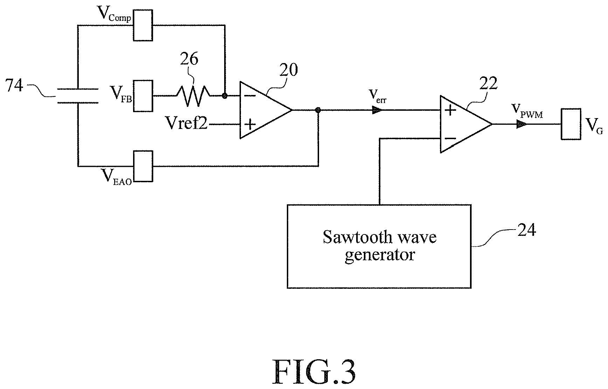

FIG. 3 is a schematic view of circuit comprising the error amplification terminal, the compensation terminal, the feedback terminal, and the control terminal as shown in FIG. 2 according to an embodiment. The PWM signal controller 110 may further comprise an error amplification unit 20, a comparator 22, a sawtooth-wave generator 24, and an operation resistor 26. A positive input terminal of the error amplification unit 20 is coupled to a reference voltage V_{ref2}. A negative input terminal of the error amplification unit 20 is coupled to the compensation terminal V_{Comp} and one end of the operation resistor 26. The other end of the operation resistor 26 is coupled to the feedback terminal V_{FB}. An output terminal of the error amplification unit 20 is coupled to a positive input terminal of the comparator 22, the sawtooth-wave generator 24 is coupled to a negative input terminal of the comparator 22, and an output terminal of the comparator 22 is coupled to the control terminal V_{G}.

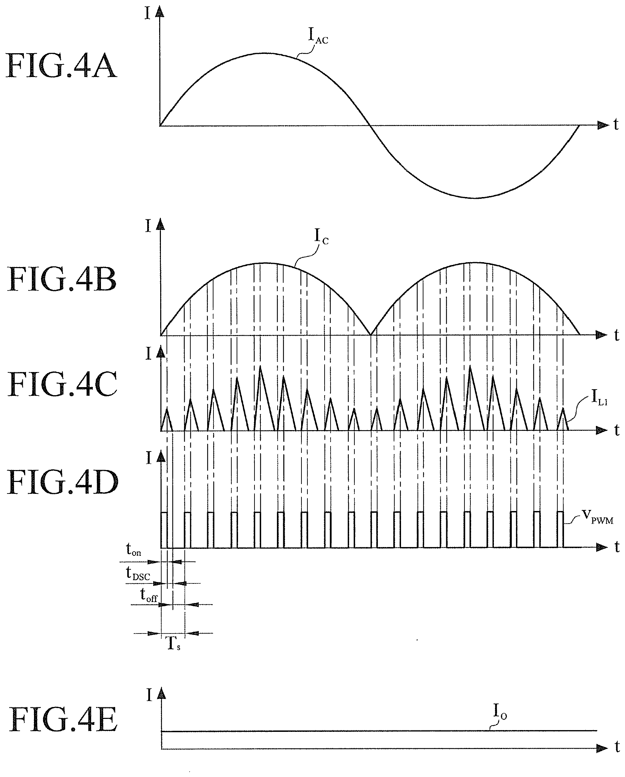

More particularly, referring to FIGs. 2, 3, 4A, 4B, 4C, 4D, and 4E, FIGs. 4A to 4E are respectively timing diagrams of signal waveforms of an AC signal, a current signal, a first current, a PWM signal, and a driving signal according to an embodiment of the circuit architecture as shown in FIG. 2. The AC signal source 102 outputs an AC signal I_{AC} to the first filter 104, and the first filter 104 filters off noises in the AC signal I_{AC}. The bridge rectifier 106 receives the AC signal I_{AC} passing through the first filter 104 and outputs a current signal I_{C} to the buck-boost converter 108, and the buck-boost converter 108 receives the current signal I_{C} and outputs a driving signal I_{O} so as to drive the five LEDs. The PWM signal controller 110 receives the driving signal I_{O} through the feedback terminal V_{FB}. Then, an error amplification operation program may be performed by the operation resistor 26, the error amplification unit 20, and the compensator 74 for calculating the driving signal I_{O} and signals received by the error amplification terminal V_{EAO} and the compensation terminal V_{Comp} so as to output an error amplified signal Vₑᵣᵣ. To output a PWM signal V_{PWM} (the cycle of the V_{PWM} is Tₛ), a comparison process which compares the error amplified signal Vₑᵣᵣ to the signal generated by the sawtooth-wave generator 24 is then performed by the comparator 22.

When the PWM signal V_{PWM} is at a high level (that is, the V_{PWM} is within a period tₒₙ), since the switching transistor 30 is turned on, the first current T_{L1} passing through the first inductor 90 is linear and proportional to time. When the PWM signal V_{PWM} is at a low level and within a period t_{DSC}, the switching transistor 30 is turned off, the second diode 98 is turned on, and the first inductor 90 supplies power to the second capacitor 94 and the LED 50 so the first current I_{L1} passing through the first inductor 90 is linear and inversely proportional to time. When the PWM signal V_{PWM} is at a low level and within a period t_{off}, the switching transistor 30 keeps in an off state, and the first current I_{L1} passing through the first inductor 90 is reset, such that the second diode 98 is turned off. Therefore, the signal received by the protection terminal V_{CS} (that is, the first current I_{L1} passing through the first inductor 90) may be in, but not limited to, a Discontinuous Current Mode (DCM).

In this embodiment, the PWM signal V_{PWM} has a constant period Tₛ (that is to say, the PWM signal V_{PWM} has a constant frequency); however, this embodiment is not intended to limit the disclosure. In some embodiments, the frequency of the PWM signal V_{PWM} is not a constant. The frequency of the PWM signal V_{PWM} may be related to the frequency of the sawtooth-wave generator 24.

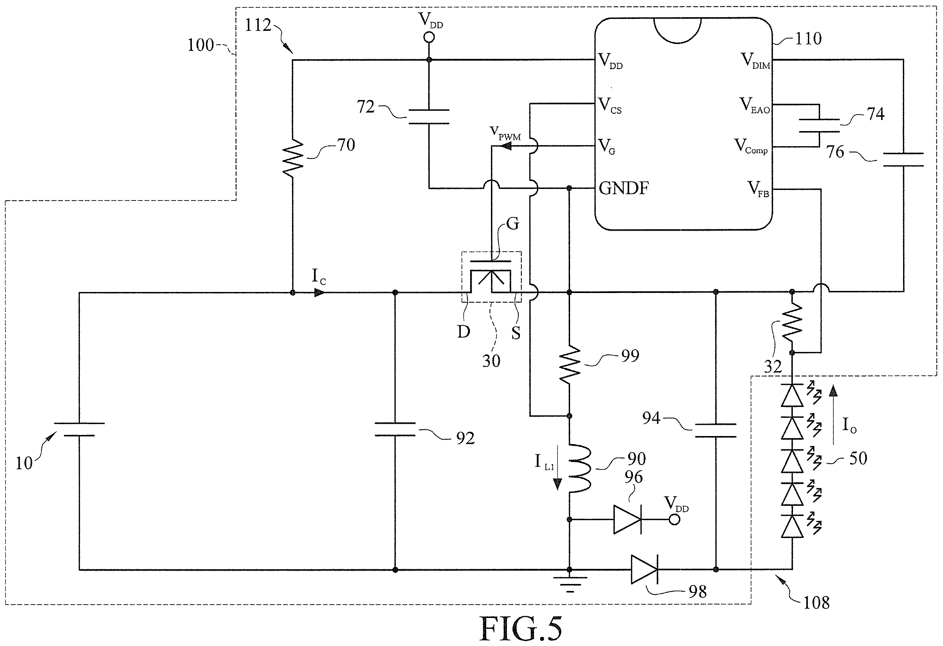

FIG. 5 is a schematic structural view of a circuit according to Embodiment 2 of FIG. 1. In this embodiment, the input power circuit 10 may be a DC signal source. The buck-boost converter 108 receives the current signal I_{C} output from the DC signal source and outputs the driving signal I_{O}, and the AC-DC dual-use LED driving circuit 100 drives the five LEDs 50 by using the driving signal I_{O}. The PWM signal controller 110 outputs the PWM signal V_{PWM} according to the driving signal I_{O} so as to sequentially turn on and turn off the switching transistor 30. In this embodiment, ways of the PWM signal controller 110 outputting the PWM signal V_{PWM} according to the driving signal I_{O} for sequentially turning on and off the switching transistor 30 is similar to those described in the embodiment of FIG. 2. They are not repeated for conciseness.

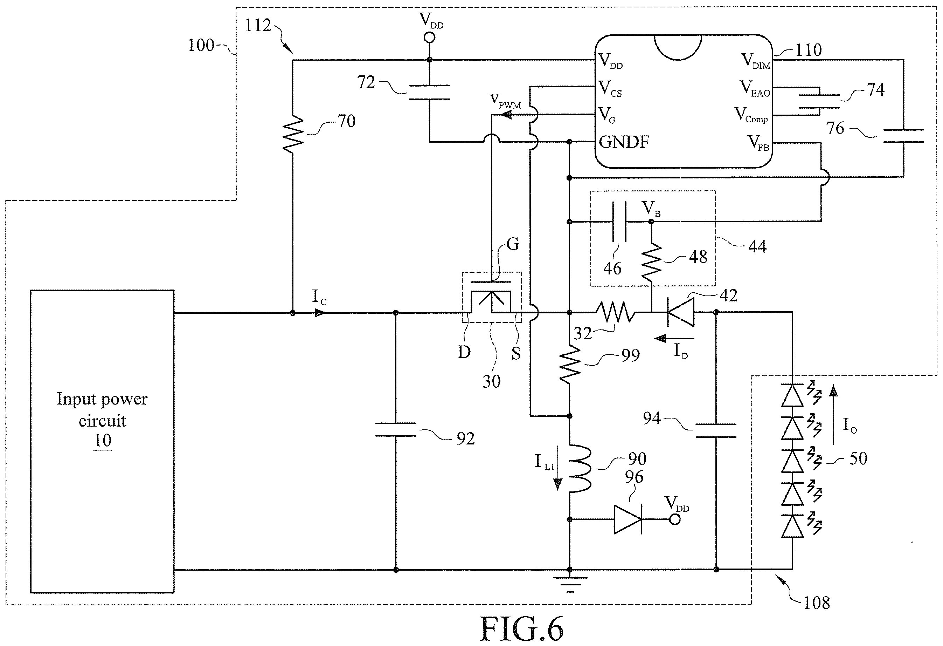

FIG. 6 is a schematic circuit block diagram of an AC-DC dual-use LED driving circuit according to an embodiment of the disclosure. In this embodiment, the AC-DC dual-use LED driving circuit 100 is suitable for driving five LEDs 50. The number of the LEDs 50 may be, but not limited to, five, and the LEDs 50 may be connected in series; however, this embodiment is not intended to limit the disclosure. That is to say, the number of the LEDs 50 may be ten. In some embodiments, the LEDs 50 may be connected in parallel, which can be adjusted according to various requirements.

The AC-DC dual-use LED driving circuit 100 comprises an input power circuit 10, a buck-boost converter 108, and a PWM signal controller 110. In this embodiment, the input power circuit 10 may be the same as the input power circuit in the FIG. 2 or FIG. 5. Besides the switching transistor 30, the feedback resistor 32, the first inductor 90, the second capacitor 94, the sensing resistor 99 and the first capacitor 92, which are also employed by the buck-boost converter 108 in FIG. 2, the buck-boost converter 108 in FIG. 6 further comprises a low pass filter 44 and a free-wheeling diode 42. One end of the free-wheeling diode 42 is connected to the low pass filter 44 and the other end of the free-wheeling diode 42 is connected to one of the five LEDs. The floating ground terminal GNDF of the PWM signal controller 110 is connected to both the switching transistor 30 and the low pass filter 44. The two ends of the feedback resistor 32 are connected to the floating ground terminal GNDF and the low pass filter 44, respectively.

In this embodiment, the low pass filter 44 comprises a second filter capacitor 46 and a filter resistor 48. One end of the second filter capacitor 46 is connected to the floating ground terminal GNDF, and the other end of the second filter capacitor 46 is connected to one end of the filter resistor 48. The other end of the filter resistor 48 is connected to both the feedback resistor 32 and the free-wheeling diode 42.

The input power circuit 10 is used to output the current signal I_{C}, and the buck-boost converter 108 receives the current signal I_{C} and outputs the driving signal I_{O}. The AC-DC dual-use LED driving circuit 100 drives the five LEDs 50 by the driving signal I_{O}. A transformed signal I_{D} passing through the free-wheeling diode 42 is received by the low pass filter 44, and the low pass filter 44 filters out the high frequency signals in the transformed signal I_{D} in order to make the filtered transformed signal I_{D}, i.e. a feedback signal V_{B}, similar to the driving signal. After receiving the filtered transformed signal I_{D} through the feedback terminal V_{FB}, the PWM signal controller 110 outputs the PWM signal V_{PWM} for sequentially turning on and off the switching transistor 30. In this embodiment, the PWM signal controller 110 may be, but is not limited to, a circuit in voltage mode.

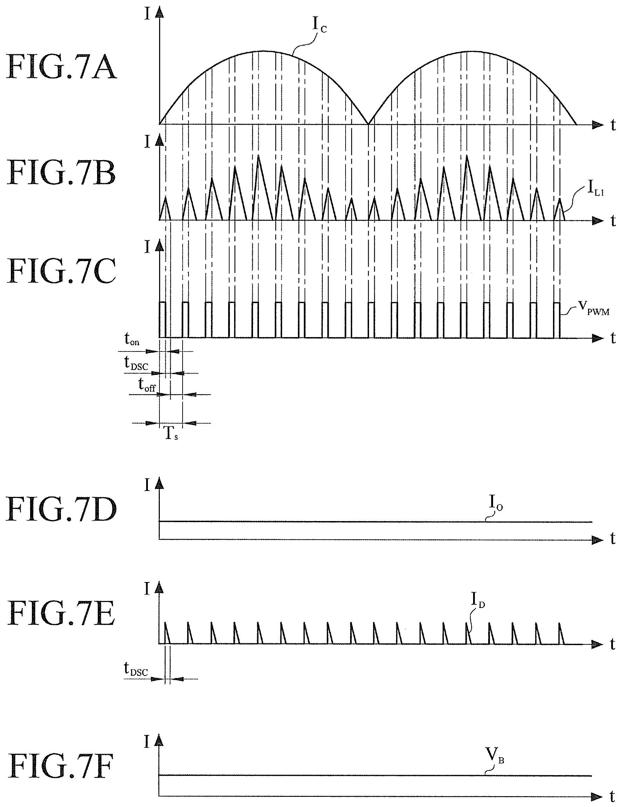

FIGs. 7A to 7F are timing diagrams of signal waveforms of a current signal, a first current, a PWM signal, a driving signal, a transformed signal and a feedback signal according to an embodiment of the circuit architecture as shown in FIG. 6. Referring to FIG. 3, FIG. 6 and FIGs. 7A∼7F, the input power circuit 10 in FIG. 6 is the same as the input power circuit in the FIG. 2. However, this embodiment is not intended to limit the input power circuit of this disclosure. The buck-boost converter 108 receives the current signal I_{C} from the input power circuit 10, and outputs a driving signal I_{O} for driving the five LEDs 50. Until the voltage of the second filer capacitor 72 reaches the working voltage of the PWM signal controller 110, the second filter capacitor 72 is charged by the current signal I_{C} which is outputted by the input power circuit 10 and passes through the starting resistor 70. After the voltage of the second filer capacitor 72 reaches the working voltage of the PWM signal controller 110, the signal received by the feedback terminal V_{FB}, i.e. the feedback signal V_{B}, and the signals received by the error amplification terminal V_{EAO} and the compensation terminal V_{Comp} are processed by the operation resistor 26, the error amplification unit 20, and the compensator 74 to perform the error amplification operation program, so that the error amplified signal Vₑᵣᵣ is generated. Then, the error amplified signal Vₑᵣᵣ is processed by the the sawtooth-wave generator 24 and the comparator 22 for performing the comparison, so that the PWM signal V_{PWM} is generated for sequentially turning on and off the switching transistor 30, i.e. an NMOSFET, wherein the period of the V_{PWM} is T_{S}. After the moment that the power control unit 112 powers the PWM signal controller 110, the first diode 96 is used by the power control unit 112 to supply power to the PWM signal controller 110.

When the PWM signal V_{PWM} is at a high level (that is, the V_{PWM} is within a period tₒₙ), since the switching transistor 30 is turned on, the first current I_{L1} passing through the first inductor 90 is linear and proportional to time. When the PWM signal V_{PWM} is at a low level and within a period t_{DSC}, the switching transistor 30 is turned off, the free-wheeling diode 42 is turned on, and the first inductor 90 supplies power to the second capacitor 94 and the LED 50, such that the first current I_{L1} passing through the first inductor 90 is linear and inversely proportional to time and that the transformed signal I_{D} passing through the free-wheeling diode 42 is also linear and inversely proportional to time. When the PWM signal V_{PWM} is at a low level and within a period t_{off}, the switching transistor 30 keeps in an off state, and the first current I_{L1} passing through the first inductor 90 is reset so the free-wheeling diode 42 is turned off. Therefore, the signal received by the protection terminal V_{CS} (that is, the first current I_{L1} passing through the first inductor 90) may be in, but not limited to, a Discontinuous Current Mode (DCM).

In this embodiment, the PWM signal V_{PWM} has a constant period Tₛ (that is to say, the PWM signal V_{PWM} has a constant frequency); however, this embodiment is not intended to limit the disclosure. In some embodiments, the frequency of the PWM signal V_{PWM} is not a constant. The frequency of the PWM signal V_{PWM} may be related to the frequency of the sawtooth-wave generator. The AC-DC dual-use LED driving circuit according to the disclosure is suitable for driving an LED. Through making the buck-boost converter and the PWM signal controller having a reference point (i.e. a floating ground) the AC-DC dual-use LED driving circuit can dynamically adjust the duty ratio of the PWM signal without connecting an external photocoupler. The duty ratio of the PWM signal is related to the magnitude of the driving signal for driving the LED. When the input power circuit comprises an AC signal source, the power factor of the AC-DC dual-use LED driving circuit can be improved, wherein the power factor is a ratio of an effective power to an apparent power. When the input power circuit is a DC signal source, no matter whether the voltage of the DC signal source is higher or lower than that of an output terminal (the voltage of a second capacitor), the current (the driving signal) for driving the LED remains a constant,. No matter whether the input power circuit comprises the AC signal source or the DC signal source, the high frequency signals in the transformed signal I_{D} which passes through the free-wheeling diode is filtered out by the low pass filter. Then, the PWM signal controller receives the feedback signal and then outputs the corresponding PWM signal.

## Claims

1. An Alternating-current-Direct-current (AC-DC) dual-use Light Emitting Diode (LED) driving circuit (100), suitable for driving an LED (50), comprising:
an input power circuit (10) for outputting a current signal (I_{C});
a buck-boost converter (108) for receiving the current signal (I_{C}) and outputting a driving signal (I_{O}), the AC-DC dual-use LED driving circuit driving the LED (50) by using the driving signal (I_{O}), the buck-boost converter (108) comprising a switching transistor (30), a feedback resistor (32), a low pass filter (44) and a free-wheeling diode (42), and one end of the free-wheeling diode (42) connected to the low pass filter (44) and the other end of the free-wheeling diode (42) connected to the LED (50); and
a PWM signal controller (110);
wherein the circuit (100) further comprises:
the PWM signal controller for outputting a PWM signal (PWM) according to a feedback signal (V_{B}) passing through the low pass filter (44) for sequentially turning on and turning off the switching transistor (30), with a floating ground terminal (GNDF) of the PWM signal controller (110) electrically connected to the switching transistor (30) and the low pass filter (44) and the two ends of the feedback resistor (32) respectively connected to the floating ground terminal (GNDF) and the low pass filter (44), **characterized by** the buck-boost converter (108) comprising a first inductor (90) and a sensing resistor (99) connected to the floating ground terminal (GNDF) of the PWM signal controller (110), wherein the PWM signal controller (110) detects via the sensing resistor (99) a first current (I_{L1}) passing through the first inductor (90).

2. The AC-DC dual-use LED driving circuit (100) according to claim 1, wherein the input power circuit (10) comprises:
an AC signal source (102) for outputting an AC signal (I_{AC});
a first filter (104) for filtering off a noise in the AC signal (I_{AC}); and
a bridge rectifier (106) for receiving the AC signal (I_{AC}) passing through the first filter (104) and outputting the current signal (I_{C}).

3. The AC-DC dual-use LED driving circuit (100) according to claim 1, wherein the input power circuit (10) is a DC signal source.

4. The AC-DC dual-use LED driving circuit (100) according to claim 1, wherein a frequency of the PWM signal (PWM) is not a constant.

5. The AC-DC dual-use LED driving circuit (100) according to claim 1, wherein a frequency of the PWM signal (PWM) is a constant.

6. The AC-DC dual-use LED driving circuit (100) according to claim 1, wherein the PWM signal controller (110) further comprises a feedback terminal and a control terminal, the feedback terminal (V_{FB}) is used for receiving the feedback signal (V_{B}), and the control terminal (V_{G}) is used for outputting the PWM signal (PWM).

7. The AC-DC dual-use LED driving circuit (100) according to claim 1, wherein the PWM signal controller (110) is a control circuit in a voltage mode.

8. The AC-DC dual-use LED driving circuit (100) according to claim 1, wherein the first current (I_{L1}) passing through the first inductor (90) is in a Discontinuous Current Mode (DCM).

## Patentansprüche

1. Wechselstrom-/Gleichstrom- (AC/DC-) Dual-Use-Treiberschaltung (100) für eine lichtemittierende Diode (LED), geeignet zum Treiben einer LED (50), mit:
einem Eingangsstromkreis (10) zum Ausgeben eines Stromsignals (Ic);
einem Abwärts-/Aufwärtswandler (108) zum Empfangen des Stromsignals (Ic) und zum Ausgeben eines Treibersignals (Io), wobei die AC/DC-Dual-Use-LED-Treiberschaltung die LED (50) mittels des Treibersignals (Io) treibt, wobei der Abwärts-/Aufwärtswandler (108) einen Schalttransistor (30), einen Feedback-Widerstand (32), ein Tiefpassfilter (44) und eine Freilaufdiode (42) aufweist und ein Ende der Freilaufdiode (42) mit dem Tiefpassfilter (44) verbunden ist und das andere Ende der Freilaufdiode (42) mit der LED (50) verbunden ist; und
einem PWM-Signal-Controller (110);
wobei die Schaltung (100) ferner aufweist:
den PWM-Signal-Controller zum Ausgeben eines PWM-Signals (PWM) entsprechend einem durch das Tiefpassfilter (44) hindurchtretenden Feedback-Signal (V_{B}), um den Schalttransistor (30) sequentiell ein- und auszuschalten, wobei ein erdfreier Masseanschluss (GNDF) des PWM-Signal-Controllers (110) mit dem Schalttransistor (30) und dem Tiefpassfilter (44) elektrisch verbunden ist und wobei die beiden Enden des Feedback-Widerstands (32) mit dem erdfreien Masseanschluss (GNDF) bzw. mit dem Tiefpassfilter (44) verbunden sind,
**dadurch gekennzeichnet, dass** der Abwärts-/Aufwärtswandler (108) einen ersten Induktor (90) und einen Messwiderstand (99) aufweist, der mit dem erdfreien Masseanschluss (GNDF) des PWM-Signal-Controllers (110) verbunden ist, wobei der PWM-Signal-Controller (110) über den Messwiderstand (99) einen ersten Strom (I_{LI}) detektiert, der durch den ersten Induktor (90) hindurchtritt.

2. AC/DC-Dual-Use-LED-Treiberschaltung (100) nach Anspruch 1, bei der der Eingangsstromkreis (10) aufweist:
eine AC-Signalquelle (102) zum Ausgeben eines AC-Signals (I_{AC});
ein erstes Filter (104) zum Herausfiltern von Rauschen in dem AC-Signal (I_{AC}); und
einen Brücken-Gleichrichter (106) zum Empfangen des durch das erste Filter (104) hindurchtretenden AC-Signals (I_{AC}) und zum Ausgeben des Stromsignals (Ic).

3. AC/DC-Dual-Use-LED-Treiberschaltung (100) nach Anspruch 1, bei der der Eingangsstromkreis (10) eine DC-Signalquelle ist.

4. AC/DC-Dual-Use-LED-Treiberschaltung (100) nach Anspruch 1, bei der eine Frequenz des PWM-Signals (PWM) keine Konstante ist.

5. AC/DC-Dual-Use-LED-Treiberschaltung (100) nach Anspruch 1, bei der eine Frequenz des PWM-Signals (PWM) eine Konstante ist.

6. AC/DC-Dual-Use-LED-Treiberschaltung (100) nach Anspruch 1, bei der der PWM-Signal-Controller (110) ferner einen Feedback-Anschluss und einen Steueranschluss aufweist, wobei der Feedback-Anschluss (V_{FB}) zum Empfangen des Feedback-Signals (V_{B}) verwendet wird und der Steueranschluss (V_{G}) zum Ausgeben des PWM-Signals (PWM) verwendet wird.

7. AC/DC-Dual-Use-LED-Treiberschaltung (100) nach Anspruch 1, bei der der PWM-Signal-Controller (110) eine Steuerschaltung in einem Spannungsmodus ist.

8. AC/DC-Dual-Use-LED-Treiberschaltung (100) nach Anspruch 1, bei der sich der durch den ersten Induktor (90) hindurchtretende erste Strom (I_{LI}) in einem diskontinuierlichen Strom-Modus (DCM) befindet.

## Revendications

1. Circuit d'attaque (100) de diode électroluminescente (DEL) à double usage en courant alternatif/courant continu (CA/CC), approprié pour attaquer une DEL (50), comprenant :
un circuit d'alimentation d'entrée (10) pour appliquer un signal de courant (I_{C}) ;
un convertisseur abaisseur-élévateur (108) pour recevoir le signal de courant (I_{C}) et appliquer un signal d'attaque (I_{O}), le circuit d'attaque de DEL à double usage CA/CC attaquant la DEL (50) au moyen du signal d'attaque (I_{O}), le convertisseur abaisseur-élévateur (108) comprenant un transistor de commutation (30), une résistance de rétroaction (32), un filtre passe-bas (44) et une diode de roue libre (42), et un côté de la diode de roue libre (42) connecté au filtre passe-bas (44) et l'autre côté de la diode de roue libre (42) connecté à la DEL (50) ; et
un régisseur de signaux à modulation de largeur d'impulsions (MLI) (110) ;
dans lequel le circuit (100) comprend en outre :
le régisseur de signaux MLI pour appliquer un signal MLI (PWM) en fonction d'un signal de rétroaction (V_{B}) traversant le filtre passe-bas (44) pour rendre le transistor de commutation (30) successivement passant et non passant, une borne de terre flottante (GNDF) du régisseur de signaux MLI (110) étant électriquement connectée au transistor de commutation (30) et au filtre passe-bas (44) et les deux côtés de la résistance de rétroaction (32) étant respectivement connectés à la borne de terre flottante (GNDF) et au filtre passe-bas (44),
**caractérisé en ce que** le convertisseur abaisseur-élévateur (108) comprend
une première inductance (90) et une résistance de détection (99) connectées à la borne de terre flottante (GNDF) du régisseur de signaux MLI (110), dans lequel le régisseur de signaux MLI (110) détecte, par l'intermédiaire de la résistance de détection (99), un premier courant (I_{L1}) traversant la première inductance (90).

2. Circuit d'attaque de DEL à double usage CA/CC (100) selon la revendication 1, dans lequel le circuit d'alimentation d'entrée (10) comprend :
une source de signal CA (102) pour appliquer un signal CA (I_{AC}) ;
un premier filtre (104) pour filtrer un bruit dans le signal CA (I_{AC}) ; et
un pont redresseur (106) pour recevoir le signal CA (I_{AC}) traversant le premier filtre (104) et appliquer le signal de courant (I_{C}).

3. Circuit d'attaque de DEL à double usage CA/CC (100) selon la revendication 1, dans lequel le circuit d'alimentation d'entrée (10) est une source de signal CC.

4. Circuit d'attaque de DEL à double usage CA/CC (100) selon la revendication 1, dans lequel une fréquence du signal MLI (PWM) n'est pas une constante.

5. Circuit d'attaque de DEL à double usage CA/CC (100) selon la revendication 1, dans lequel une fréquence du signal MLI (PWM) est une constante.

6. Circuit d'attaque de DEL à double usage CA/CC (100) selon la revendication 1, dans lequel le régisseur de signaux MLI (110) comprend en outre une borne de rétroaction et une borne de commande, la borne de rétroaction (V_{FB}) sert à recevoir le signal de rétroaction (V_{B}) et la borne de commande (V_{G}) sert à appliquer le signal MLI (PWM).

7. Circuit d'attaque de DEL à double usage CA/CC (100) selon la revendication 1, dans lequel le régisseur de signaux MLI (110) est un circuit de commande en mode tension.

8. Circuit d'attaque de DEL à double usage CA/CC (100) selon la revendication 1, dans lequel le premier courant (I_{L1}) traversant la première inductance (90) est en mode courant discontinu (DCM).
